# EUROPEAN PATENT SPECIFICATION

(11) **EP 0 701 200 B1**
(45) Date of publication and mention of the grant of the patent: **04.10.2000**
(21) Application number: 95112605.1
(22) Date of filing: 10.08.1995
(51) Int. Cl.: G06F 9/44

(54) **Tape printer**
Streifendrucker
Imprimante pour ruban

(30) Priority: 11.08.1994 JP 18965194; 16.06.1995 JP 15061795
(43) Date of publication of application: 13.03.1996
(73) Proprietor: SEIKO EPSON CORPORATION, Tokyo 163 (JP); KING JIM CO., LTD., Tokyo 101 (JP)
(72) Inventor: Hayama, Hitoshi, c/o Seiko Epson Corp., Suwa-shi, Nagano-ken, 392 (JP); Watanabe, Kenji, c/o King Jim Co., Ltd., Chiyoda-ku, Tokyo, 101 (JP)
(74) Representative: Hoffmann, Eckart, Dipl.-Ing.

(56) References cited:
- EP-A- 0 333 612
- EP-A- 0 473 147
- EP-A- 0 499 211
- GB-A- 2 121 574
- US-A- 5 133 610

## Description

The present invention relates to tape printers, and more particularly to tape printers having a display section for displaying various types of information.

Tape printers or tape writers as they are sometimes called are used for printing a desired string of characters, symbols and the like on the front surface of a tape which is usually coated with an adhesive on the rear surface thereof. Such tape printers enable the user to readily and neatly print, for example, a headline or a title on the surface of a tape, the printed tape then being easily adhered on the spine or cover of a document file, on the spine of a video tape or elsewhere. Such tape printers are very handy and thus extensively used in industrial fields and households.

Because of their widespread use such tape printers are operated by a variety of users of different levels of education and/or experience with the use of modern machines like a tape printer. To assist users in easily and effectively using such tape printers, it has been considered helpful to add a display function to such tape printers for displaying messages and warnings for guiding a user through the steps required for printing a desired tape. Tape printers having such display function are disclosed in JP-A-163080/1992 and JP-A-28247/1993. These known tape printers are capable of displaying messages, warnings, etc. only in Japanese. Thus, these tape printers can hardly be used in other countries where people are not familiar with the Japanese language. Of course, the usefulness of such tape printers is not restricted to Japan and there is a demand for such apparatus in other countries. To meet this demand, it is necessary to develop and manufacture a variety of kinds of tape printer each designed to display messages, etc. in the language of the respective country to which it is intended to be shipped. Developing and manufacturing of such different kinds of such tape printer increases the price of the individual tape printer.

Accordingly, it is an object of the present invention to provide a tape printer which can be easily used by users in different countries with different languages and which can be manufactured and supplied at low costs.

This object is achieved with a tape printer as claimed in claim 1.

Specific embodiments of the invention are subject-matter of the dependent claims.

A tape printer in accordance with the present invention offers the possibility of a user to select among two or more languages used for displaying messages, warnings, etc. to guide the user in making most effective use of the tape printer.

The tape printer of this invention allows to select the language used to display the messages so that the same kind or the one type of the tape printer can be used in different linguistic areas. Therefore, there is no necessity of developing, manufacturing and selling two or more types of tape printer corresponding to different linguistic areas and countries. Hence the time, cost and labor to manage multiple types are saved. It becomes possible to provide the tape printer according to this invention at a low price so that more users can afford buying this tape printer. A user can easily select and set the language most convenient for her or him. Thus, since the user will understand the messages and warnings displayed, she or he will easily understand the reason why any erroneous operation occurred and can take an appropriate countermeasure.

Preferred embodiments of the invention will be described in detail below with reference to the drawings, in which:
- Fig. 1: is a schematic perspective view of a tape printer according to one embodiment of the present invention,
- Fig. 2: is a block diagram of a control system of the tape printer shown in Fig. 1,
- Fig. 3: is a functional block diagram illustrating various control processes performed by the control system,
- Fig. 4: is a flowchart which shows part of a control process in the tape printer shown in Fig. 1,
- Fig. 5: is a flowchart which shows the process for displaying a message in a selected language,
- Fig. 6: shows the content of a menu displayed in the process for selecting the language,
- Fig. 7: shows examples of various tables used in the process of Fig. 5,
- Fig. 8: lists an example of messages expressed in various languages,
- Fig. 9: is a flowchart similar to Fig.4 of another embodiment of the control process, and
- Fig. 10: shows an another example of the menu to be displayed during the language selection process.

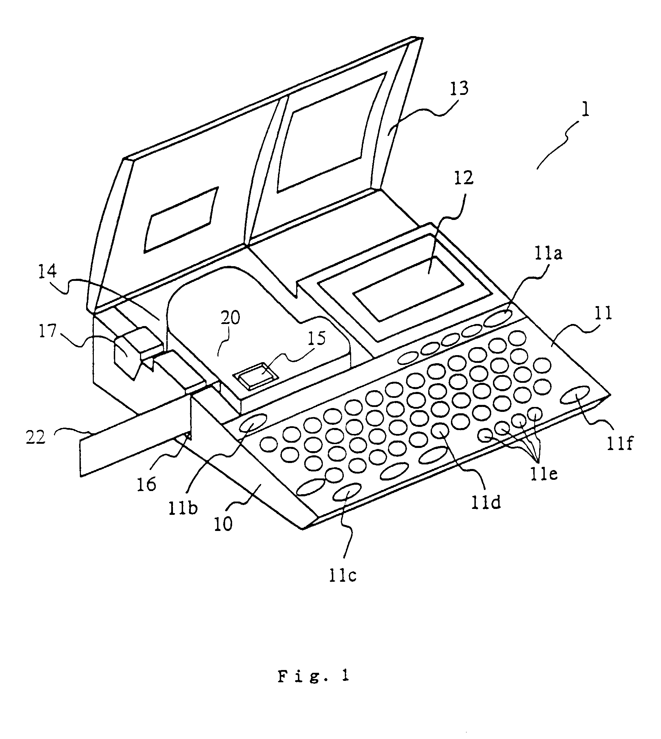

Figure 1 is a perspective view of the tape printer 1 in accordance with an embodiment of the present invention. The tape printer 1 of this embodiment has a main body 10, a keyboard 11, an LCD (liquid crystal display) panel 12, and a body cover 13 adapted to be opened and closed freely. On the LCD panel 12, input data, i.e. data to be printed, and other character strings showing such as various setting status and other information relating to the tape printer 1 are displayed. LCD panel 12 is also used for displaying warnings and other types of messages intended to assist a user in operating the tape printer. A tape cartridge storage part 14 is provided in the upper left part of the main body so as to accommodate an ink ribbon (not shown in the Figure) and a tape cartridge 20 including a tape 22 to be printed by the ink ribbon.

To use this tape printer 1, if a tape cartridge has not been installed already, first the cover 13 is opened to the state illustrated in Fig. 1. Then the tape cartridge 20 is put into the tape cartridge storage part 14 such that the end of tape 22 extends through a tape outlet 16 formed in the left side wall of the main body 10. The cover 13 is then closed. Then, the power supply is turned on by operating a power supply key or switch 11a, and, using the keyboard 11, the user enters the characters and their attributes she or he wants to print. When a print key 11b is pressed, printing of the tape is started and the characters previously input are printed on the tape 22, which is supplied from the tape cartridge 20, according to the attributes specified therefor. The printed tape 22 is delivered from the tape outlet 16. After this, by depressing a cutter button 17, the printed tape 22 is cut with a cutter which is not shown in the Figure but installed near the tape outlet 16.

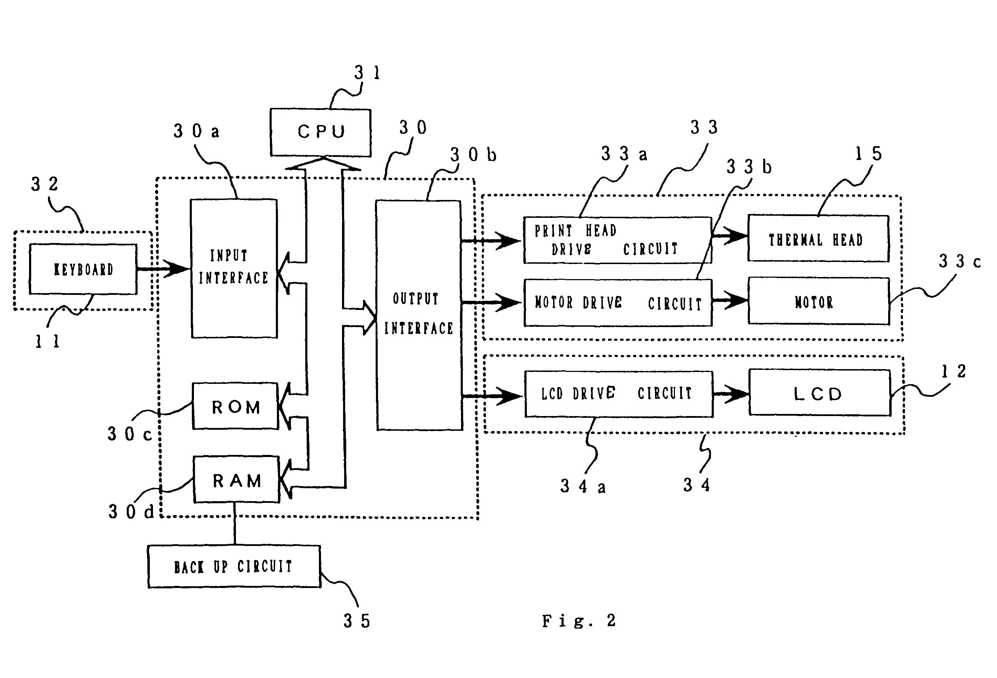

Referring to Figure 2, the control system of the tape printer 1 of this embodiment is explained. A one-chip microcomputer is used as the main control device. The microcomputer comprises a CPU 31 and a memory and interface unit 30. Connected to the microcomputer are an input section 32, a printer section 33, and a display section 34.

The memory and interface unit 30 includes an input interface 30a connected to the input section 32, an output interface 30b connected to the printer section 33 and the display section 34, a ROM 30c and a RAM 30d. ROM 30c stores programs for controlling the operation of CPU 31, font data necessary for the printer section to print the desired characters and symbols, and other data as will be explained below. RAM 30d stores the data input from the input section 32. The power for RAM 30d is supplied by a backup power supply circuit 35 separate from the power supply to the other electronic circuit parts so as to enable the RAM to maintain its data regardless of the operation of the power supply key 11a. Among the programs for controlling the tape printer 1 of this embodiment is a program which allows the user to select the language in which messages will be displayed.

The input section 32 includes the keyboard 11 having 63 keys classified into character keys and function keys. By the character keys, the characters to be printed are input. These characters are then stored as text data. By the function keys, suitable functions such as for setting the character attributes, editing the text data that have been input, and printing are chosen.

The display section 34 comprises the LCD panel 12 and an LCD drive circuit 34a which drives the LCD panel for displaying the text data stored in RAM 30d and the messages mentioned before.

The printer section 33 comprises a thermal print head 15, a stepping motor 33c, and drive circuits 33a and 33b, respectively, therefor.

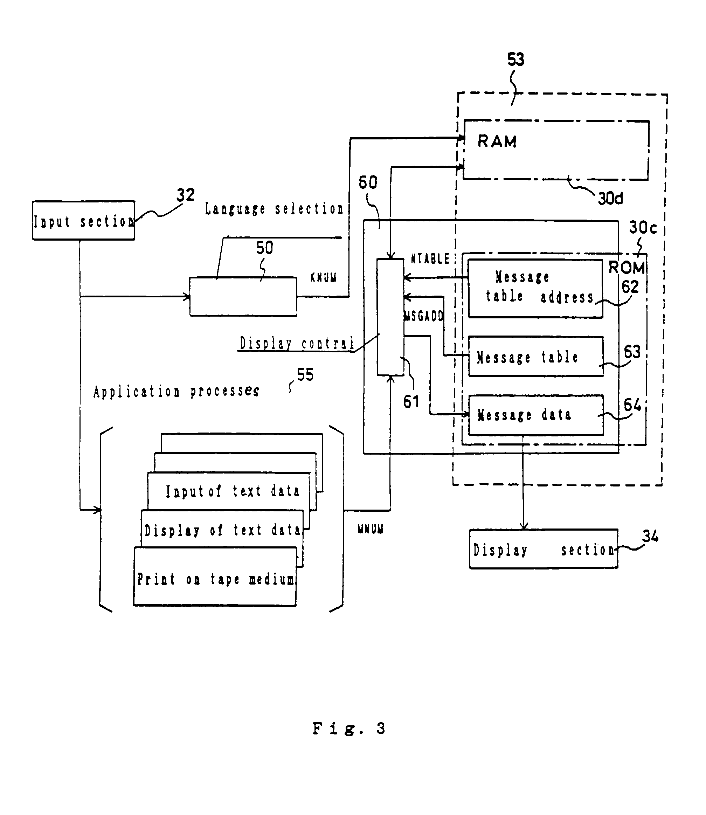

Figure 3 is a functional block diagram of the control system. Block 50 represents a process for selecting the language in which messages will be displayed on the LCD panel 12. Block 60 represents a process for retrieving and displaying the messages in the selected language as well as for displaying menu items and others during the language selection process 50. Blocks 55 represent various other processes (referred to as application processes hereinafter) such as text data entry, display of entered text, editing of entered text, printing and others.

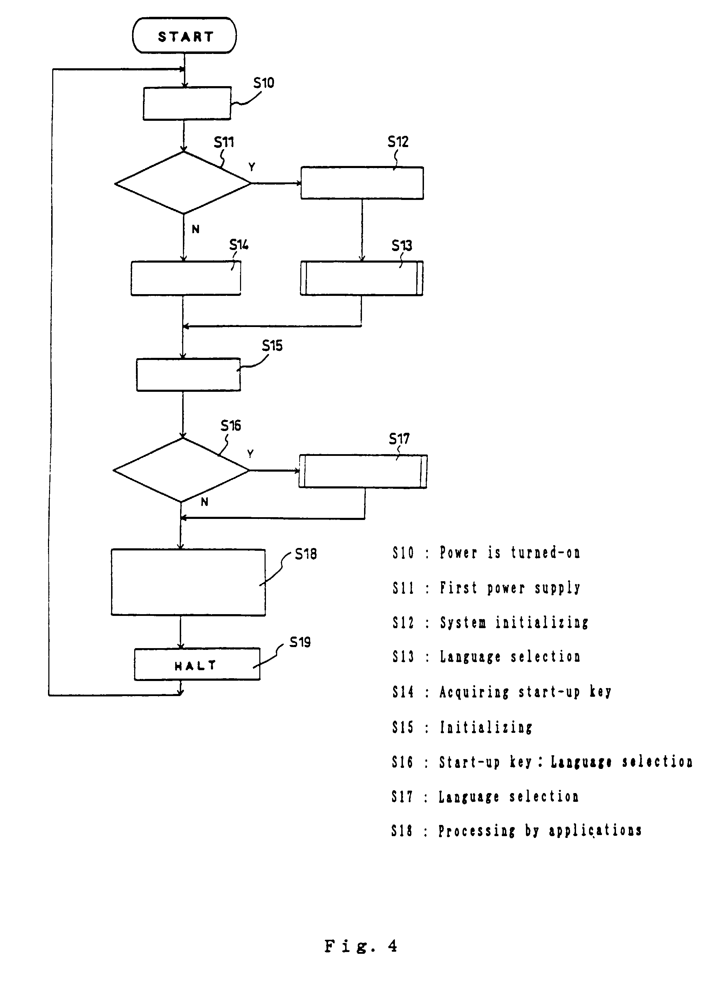

Fig. 4 is a flow chart illustrating a part of the control process according to one embodiment of the invention. The process is started when the power is switched on (S10) by operating the power supply key 11a. In this embodiment, when either one on two conditions is met the language selection process is invoked before the control process proceeds to the application processes. When none of the two conditions is met the control process proceeds to the application processes without performing the language selection process before. One of the above two conditions is that the power is switched on for the first time such as after the first installation of the batteries (when the tape printer is battery powered) or after the batteries have been replaced. In this case the language selection process is automatically performed without requiring any particular operation other than turning on power. The second condition is that while the power supply key is operated to switch the power on, two other predetermined keys are simultaneously pressed. Thus, the second condition requires a specific operation by the user and allows her or him to change the language whenever she or he likes to.

According to Fig. 4, in step S11 it is judged whether the first of the above mentioned two conditions is met, i.e. whether this is the first time the power is switched on. If so, the process proceeds to step S12 where a minimum initialization of the system necessary for activating the tape printer is performed. Then, in step S13 the language selection process 50 is started.

In this embodiment, since a microcomputer is used as control device, start of the language selection process means that a corresponding program is loaded from ROM 30c and executed.

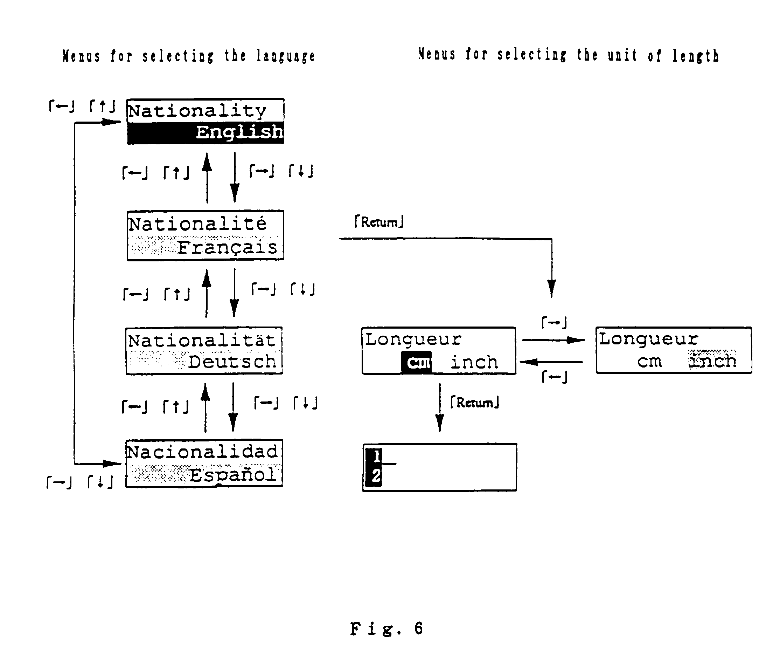

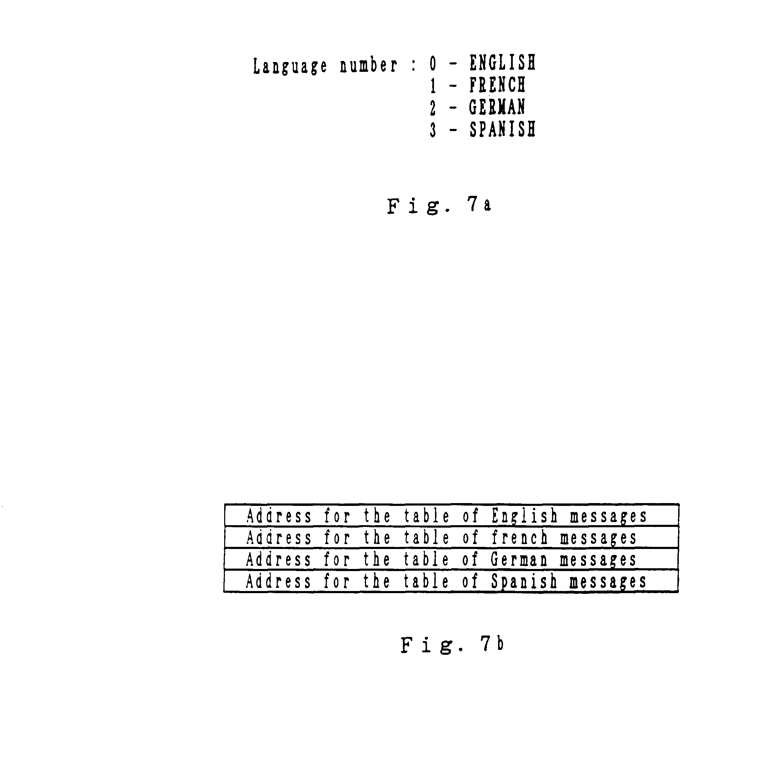

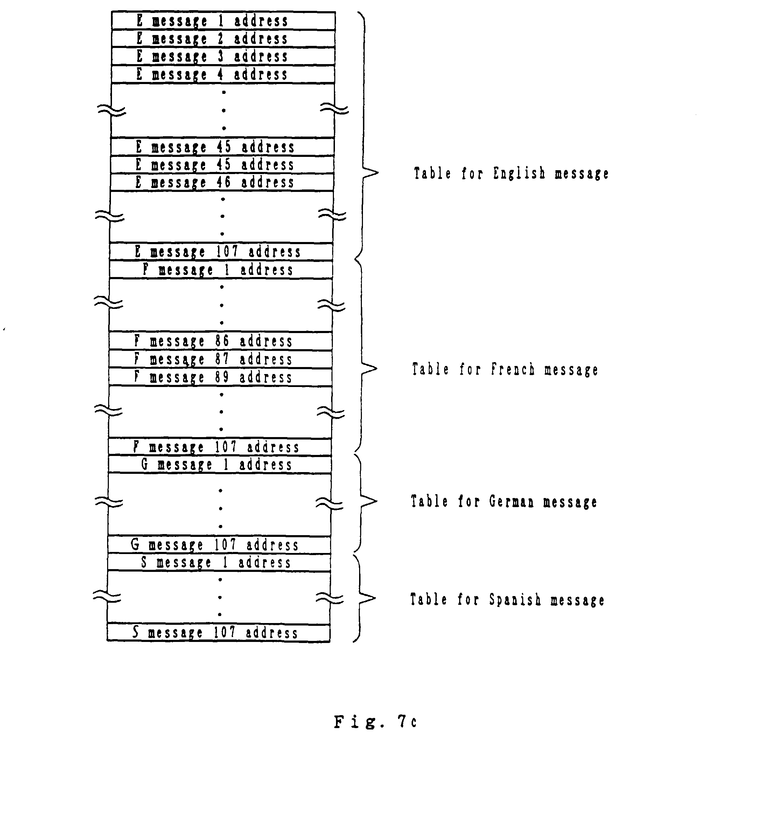

When the language selection process starts, one of the images illustrated in Figure 6 appears on LCD panel 12. In each image shown in Figure 6, the expression in the first line is to inform the user that this is the menu for language selection and is displayed in one of the languages among which the user may select. The expression in the second line is the name of that language. The user only has to operate arrow key 11e on keyboard 11 for selecting the language. Every time key 11e is operated another one of the available languages appears on the LCD panel in a cyclic order. For finally setting the selected language, the user only has to press the "Return" key 11f on keyboard 11. The language being displayed on LCD panel 12 at this time is set. A unique number KNUM (see Fig. 7a) is allocated to each of the available languages (0 ≤ KNUM ≤ number of available languages - 1). When a selection has been confirmed by pressing the "Return" key, the corresponding number KNUM is stored in RAM 30d.

In the tape printer of this embodiment, in step S13 for selecting the language, it is also possible to select the unit for indicating the tape length. For such operation, the language selection menu shown in Figure 6 takes a hierarchical structure. Therefore, after the language is selected and set, the unit of length can be selected using corresponding menu images for the selection. The unit of length is only a one example of items that may be selected using the hierarchical menu structure. It is also possible to include other functions into the menu, such as choosing a special dictionary for spell checking, selecting among various character fonts and/or character sets and other functions which are peculiar to the different cultural spheres or languages. These items are usually different in each linguistic area, country or region, therefore it may be convenient if these items can be changed together with the language. Hence, the tape printer of this embodiment has the language selection process which can do the additional processing for selecting such items as mentioned above. So, the user can easily establish the operating environment most convenient for herself or himself. Moreover, since only a small number of operations is required to change the above items, the user can hardly make an error and be annoyed at that process. Also, the user can immediately understand which languages and units can be selected without wasting time for searching the manuals.

When the language selection process in step S13 is finished, the indication of LCD panel 12 assumes a normal image condition waiting for input as shown on the right hand side in the bottom line in Fig. 6. The then operation shifts to step S15 at which initializations are carried out which are required to perform the application processes . On the other hand, if it is judged in step S11 that it is not the first time the power is switched on, the control process acquires the key status, i.e which keys, if any, were pushed by the user at the time of operating the power supply key (step S14). In this embodiment, if the user would like to change the language once set , the user can push the power supply key 11a together with a "Function" key 11c and the "N" key 11d. In step S14, the state of the keys when the power was switched on, is confirmed and stored in RAM 30d. If the "Function" and the "N" keys are pushed at the same time that information will be stored.

At step S15, various elements included in this tape printer and used by the application processes such as display, printer section and others are initialized. After the initialization, in step S16, the state of the keys acquired at step S14 is checked. When the information that the "Function" and "N" keys were pushed is stored in the RAM 30d (the second of the above two conditions is met), the process shifts to step S17 in which the language selection process 50 starts and is performed in the same way as that of the step S13. After the language selection, the operation shifts to the step S18 in which the various application processes will work. When the check in step S16 reveals that the second condition for starting the language selection is not met, the operation shifts to step S18 directly without performing the language selection process, and the various application processes such as displaying the text data, editing, printing and the others will be ready for start.

When the series of some application processes is completed in the present tape printer, in step S19 the power supply is turned off by the user.

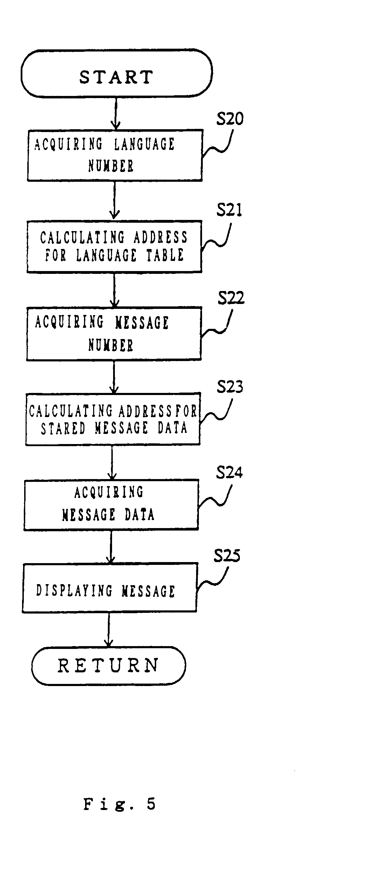

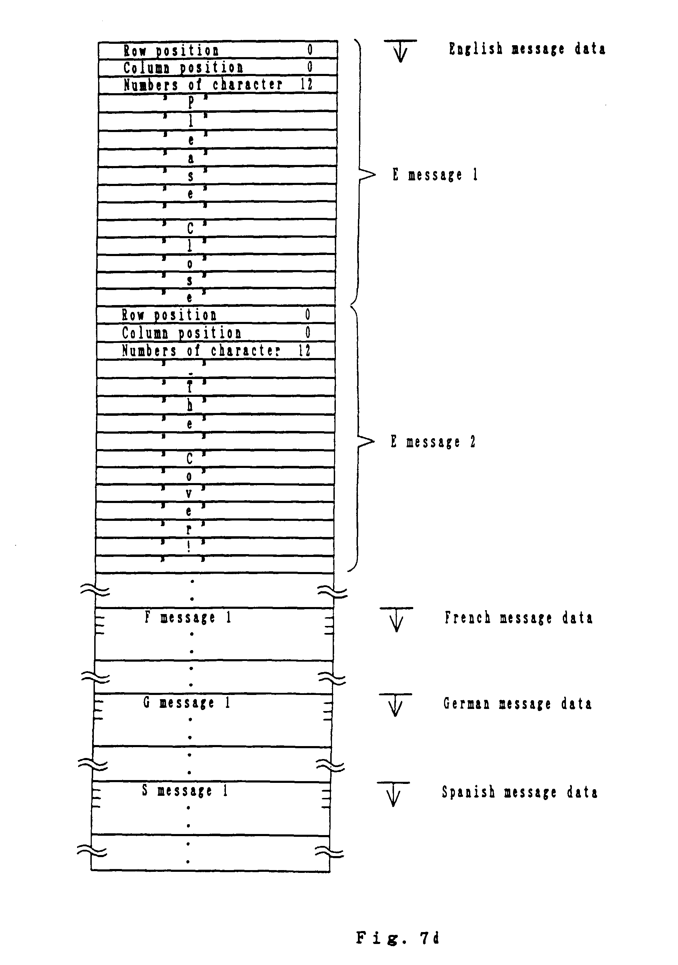

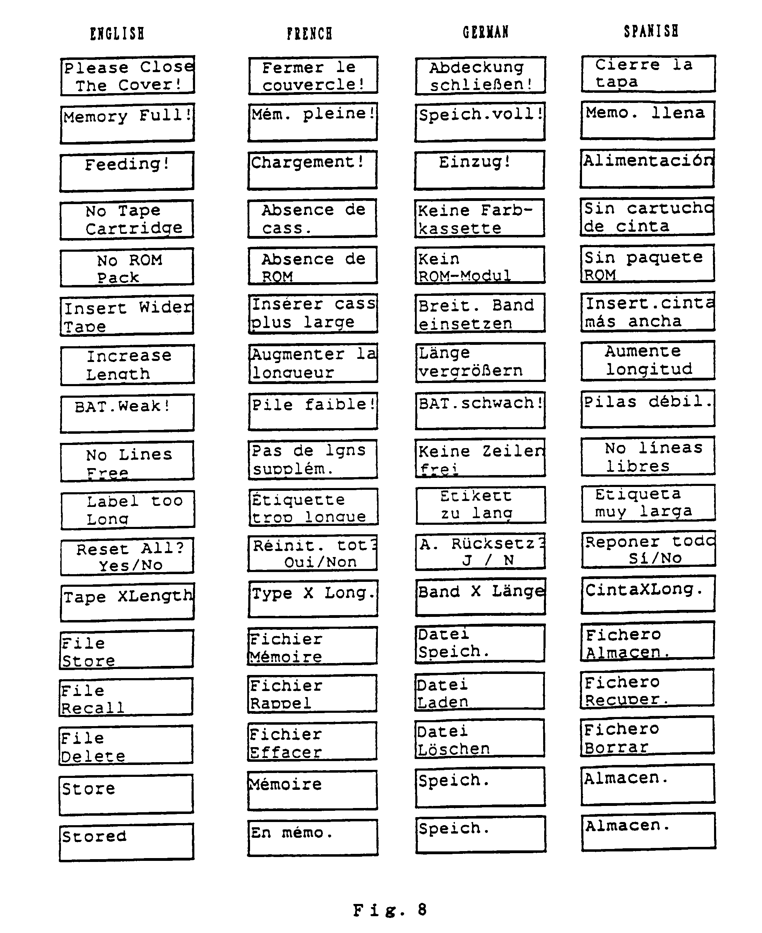

Fig. 5 is a flow chart illustrating the process of displaying messages in the respective language selected and set as explained before. In the tape printer of this embodiment, at the process for setting various functions and/or when an error occurred, , messages are displayed extensively on the LCD panel 12 to facilitate operation of the tape printer. The message display process 60 retrieves a message from a message memory 64 which is included in ROM 30c. The message memory stores sets of messages each set including all available messages expressed in a respective one of the available languages. A message set address table 62 (Fig. 7b) and message address tables (Fig. 7c) are used for getting the address of a particular message in the message memory 64. Each message address table 63 stores the addresses (MSG) of one set of messages in the message memory 64. The message set address table 62 stores the leading address (NTABLE) of each message table 63. The tables 62 and 63 are also included in ROM 30c, i.e. the addresses of the tables are addresses of ROM 30c. The message display process 60 includes a routine 61 for finding the address of a certain message to be indicated using a message number MNUM acquired from the application process or the language selection process and the language number KNUM. The outlines of address tables 62 and 63 and of message memory 64 are shown in Figure 7. Examples of the messages in several languages are shown in Figure 8.

In the message display process, at first, the language number KNUM stored in RAM 30d as a result of the language selection process is read at step S20. The leading address of the message set table 62 in ROM 30c is ADTBL. In this address is stored the leading address (NTABLE) of a first one of the message address tables 63, namely the one storing the addresses of the messages expressed in a language to which the language number KNUM = 0 has been allotted. Assuming that each address entry in the message set address table 62 occupies two memory locations, two bytes for example, the address of the second message address table (KNUM = 1) is found at the address ADTBL + KNUM*2. Thus, at step S21, the leading address NTABLE of the message address table 63, in which the addresses of the messages expressed in the selected language are stored, is obtained as follows:$\text{NTABLE <= (KNUM*2) +ADTBL}$ wherein "< =" means that the data stored in address ((KNUM*2) + ADTBL) of message set address table 62 will be set as the value of NTABLE. As explained before, the value of NTABLE resulting from step S21 is the leading address of that one of the message address tables 63 which includes the addresses MSG of the messages expressed in the language represented by KNUM. The value of NTABLE is temporarily stored in the RAM 30d for use in the later steps.

Then, at step S22, the message number MNUM (0 ≤ MNUM ≤ number of messages in one set - 1), which identifies the message to be displayed, is acquired from the active application process or from the language selection process, if it is active. In step S23, the address MSG in the message memory 64, from which the message to be displayed is to be retrieved, is obtained as follows:$\text{MSG <= (MNUM*2) +NTABLE.}$

Again it is assumed that each entry in each of the message address tables 63 occupies two memory locations. Thus, the address of the first message (MNUM = 0) is stored at the leading address NTABLE of the respective message address table. The address of a second message (MNUM = 1) is stored at the address 1*2 + NTABLE, etc..

In step S24, as is shown Figure 7d, the row number and column number of the display position on LCD panel 12, and the number of the characters of the message are taken in addition to the actual data forming the message from the address MSG in the message memory 64.

Finally, at step S25, signals generated from these data relating to the message are sent to the LCD drive circuit 34a in the display section 34, and the message is displayed in the selected language on the LCD panel 12, and then the series of processes to display the message ends.

As described above, in the tape printer of this embodiment, the language used for displaying messages can be selected by the language selection process 50. In addition, by the message display process 60, it becomes possible to express the various messages in the specified language selected among a plurality of the languages prepared in the tape printer. Among the many languages, once the user's convenient language is set, the messages are always displayed in the same language, because a change of the language once selected is not possible by usual operations on the input section. Note that the language number KNUM is stored in RAM which keeps its contents even if the power is switched off because power supply to the RAM is maintained by means of the backup circuit 35.

The above-mentioned way of storing message data and for acquiring the address to obtain a certain messages in the specified language is just one example and it should be noted that the scope of the invention is not to be limited to this example. The advantage of the way of storing messages explained above is that the messages expressed in different languages may have a different length and still each message only requires memory space corresponding to its length.

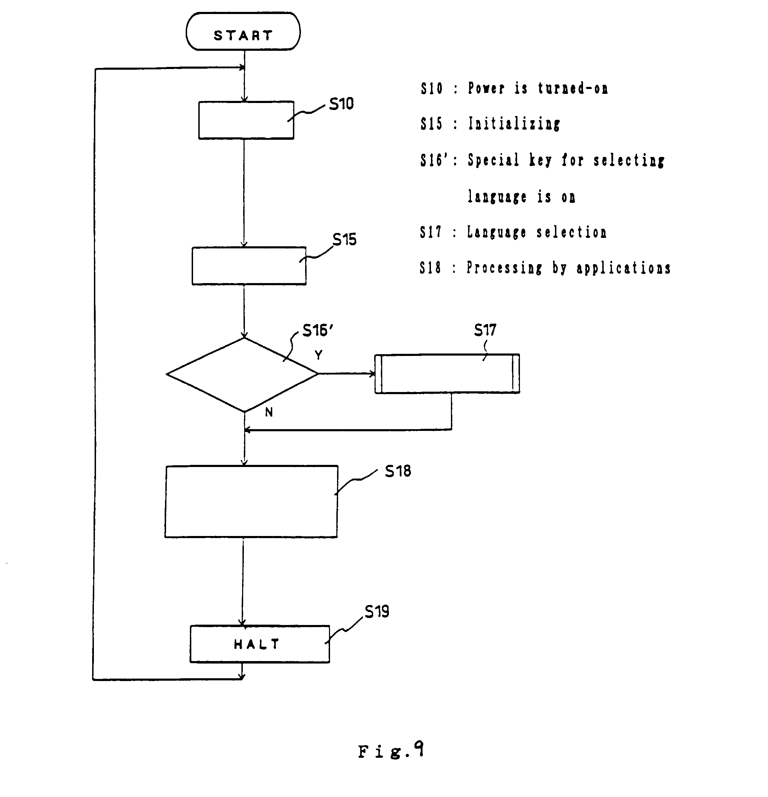

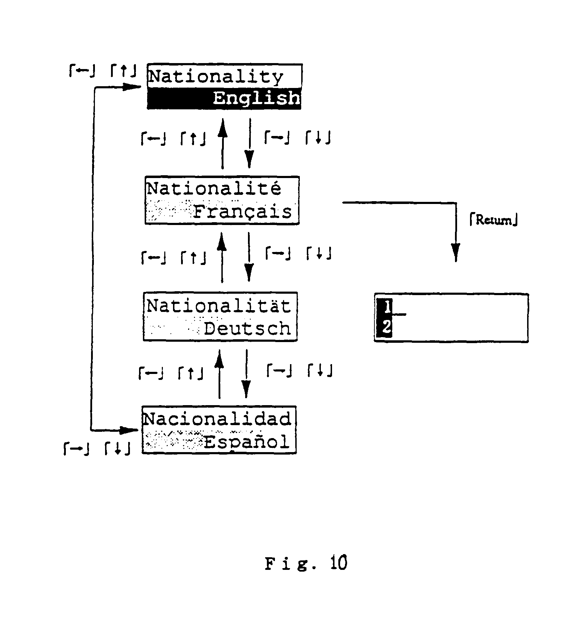

In addition, the steps of starting the language selection process are not limited to the above-mentioned check whether one of those two conditions is fulfilled. For instance, the language selection process may be started only if the second of the above two conditions is met, disregarding the first power-on. As will be understood, steps S11, S12 and S13 in Fig. 4 would be omitted in this case. With regard to the start keys for starting the language selection process, the combination of the power supply key with the "Function" key and the "N" key is also illustrated just as an example of this embodiment, but not limited to this combination of start keys. Alternatively, the language selection process may be started only when the power is turned on for the first time. In this case steps S14, S16 and S17 in Fig. 4 would be omitted. Moreover, as shown in Fig. 9, a key exclusively used for starting the language selection process might be provided on the keyboard 11 so as to allow the language selection process to be started whenever this particular key is operated. In Fig. 9 the same reference signs are used as in Fig. 4. In step S16' it is checked whether or not the function key for language selection has been pressed. If so, step 17 is executed and otherwise step S18. In the present embodiment, the unit of length can be selected as part of the process for selecting the language. However, it may also be possible to prepare a menu used only for language selection. In such modified embodiment, as shown in Fig. 10, the image displayed on the panel changes to the usual state for working the application processes immediately after the language selection process ends.

In the tape printer of this invention, the fact that the language may be selected under one or more particular conditions only, makes the users keep in mind that they set important functions and prevents them from changing the selected language inadvertently. On the other hand, in the tape printer of this invention, the option for selecting the language is open for the users so as to select the convenient language easily. When the menu for selecting the language is displayed automatically at the first power on operation, the user can select the desired language promptly and adequately without referring to the instruction manual. By adding the above steps for language selection, the user can use the tape printer more conveniently. The alternative of providing a key exclusively used to choose the language may be particularly useful in a case where one tape printer is shared by multiple users with different mother tongues.

In addition, some peculiar functions relating to the cultural difference such as the unit of length and the like can be changed at the same process for selecting the language. Hence, by the present invention, most convenient tape printers are provided.

The embodiments of a tape printer in accordance with the present invention have been described above as using a one-chip microcomputer as the main control device. This should be understood to be an example only and the control device and method are not limited to a software controlled CPU. Instead, a microprogram control and/or a hard wired logic performing substantially the same function may be employed. In step S13, the tape printer will be controlled by a microprogram memory if the microprogram control method is applied, and the tape printer will be controlled by a logic circuit if a hard wired logic is used.

## Claims

1. A tape printer for printing on a tape like medium, comprising:
input means (32) for entering data to be printed;
display means (34);
memory means (30c) for storing plural sets of messages to be displayed on said display means for operation guidance, each set including messages expressed in a respective one of at least two different languages;
language selection means (50) for allowing a user to select a language among said at least two different languages; and
means (60) for retrieving, from said memory means, messages from that set of messages corresponding to the selected language and for displaying a retrieved message on said display means,
wherein said input means comprises a keyboard (11), and wherein said language selection means is started in response to a combined operation of a power supply key (11a) with at least one predetermined other key of the keyboard, or when the power supply is turned on for the first time.

2. The tape printer of claim 1, wherein respective language numbers are allocated to said at least two languages and the same message number is allocated to corresponding messages in each set of messages such that each message is addressed by its message number and the language number.

3. The tape printer of claim 2, wherein said memory means further comprises a first address table (62) and a plurality of second address tables (63), one for each of said sets of messages, each entry in each of the second address tables being the address of a message, while each entry in said first address table being the start address of a respective one of the second address tables, and wherein said retrieving means is adapted to read from an address of said first address table corresponding to the language number the start address of a respective second address table, to calculate, based on the start address and said message number an address of said respective second address table, and to read from the thus calculated address the address of a message to be displayed.

4. The tape printer of any one of claims 1 to 3, wherein said language selection means can change at least one of other selective items which are different in countries and regions in a same process for selecting a language.

## Patentansprüche

1. Streifendrucker zum Drucken auf ein streifenartiges Medium, mit:
einer Eingabeeinrichtung (32) zum Eingeben von zu druckenden Daten;
einer Anzeigeeinrichtung (34);
einer Speichereinrichtung (30c) zum Speichern einer Vielzahl von Gruppen von Nachrichten, die an der Anzeigeeinrichtung für eine Bedienungsführung darzustellen sind, wobei jede Gruppe Nachrichten enthält, die in einer jeweiligen von wenigstens zwei unterschiedlichen Sprachen ausgedrückt sind;
einer Sprachen-Wähleinrichtung (50), um einem Anwender die Möglichkeit zu geben, eine Sprache unter den wenigstens zwei unterschiedlichen Sprachen auszuwählen; und
einer Einrichtung (60) zum Abrufen, aus der Speichereinrichtung, Nachrichten aus derjenigen Gruppe der Nachrichten, die der ausgewählten Sprache entspricht, und zum Anzeigen der abgerufenen Nachricht an der Anzeigeeinrichtung,
wobei die Eingabeeinrichtung ein Tastenfeld (11) umfaßt und die Sprachenauswähleinrichtung in Abhängigkeit von einer kombinierten Betätigung einer Stromversorgungstaste (11a) mit wenigstens einer vorbestimmten anderen Taste des Tastenfeldes gestartet wird, oder wenn die Stromversorgung zum ersten Mal eingeschaltet wird.

2. Streifendrucker nach Anspruch 1, bei dem den wenigstens zwei Sprachen jeweiligen Sprachenzahlen zugeordnet sind und die gleiche Nachrichtenzahl einander entsprechenden Nachrichten in jeder Gruppe der Nachrichten in solcher Weise zugeordnet ist, dass jede Nachricht durch ihre Nachrichtenzahl und die Sprachenzahl adressiert wird.

3. Streifendrucker nach Anspruch 2, bei dem die Speichereinrichtung ferner eine erste Adressentabelle (62) und eine Vielzahl von zweiten Adressentabellen (63), eine für jede der Gruppen von Nachrichten, umfaßt, wobei jeder Eintrag in jeder der zweiten Adressentabellen die Adresse einer Nachricht ist, während jeder Eintrag in der ersten Adressentabelle die Startadresse einer jeweiligen zweiten Adressentabellen ist, und bei dem die Abrufeinrichtung dafür ausgebildet ist, aus einer Adresse der ersten Adressentabelle entsprechend der Sprachenzahl die Startadresse einer betreffenden zweiten Adressentabelle auszulesen und basierend auf der Startadresse und der Nachrichtenzahl eine Adresse der betreffenden zweiten Adressentabelle zu berechnen und aus der so berechneten Adresse die Adresse einer anzuzeigenden Nachricht zu lesen.

4. Streifendrucker nach irgendeinem der Ansprüche 1 bis 3, bei dem die Sprachenwähleinrichtung wenigstens einen von anderen Wählpunkten, die in Ländern und Zonen unterschiedlich sind, im gleichen Prozeß für die Auswahl einer Sprache ändern kann.

## Revendications

1. Imprimante sur bande pour imprimer sur un support en forme de bande, comportant :
des moyens (32) d'entrée destinés à introduire des données à imprimer ;
des moyens (34) d'affichage ;
des moyens (30c) de mémorisation destinés à mémoriser plusieurs ensembles de messages qui sont à afficher sur les moyens d'affichage pour un guidage des opérations à effectuer, chaque ensemble comportant des messages exprimés dans une langue choisie parmi au moins deux langues différentes ;
des moyens (50) de sélection de langue destinés à permettre à un utilisateur de sélectionner une langue parmi lesdites au moins deux langues différentes ; et
des moyens (60) destinés à extraire, à partir des moyens de mémoire, des messages à partir de l'ensemble de messages qui correspond à la langue sélectionnée et destinés à afficher un message extrait sur les moyens d'affichage,
dans laquelle les moyens d'entrée comportent un clavier (11), et dans laquelle des moyens de sélection de langue démarrent en réponse à un actionnement combiné d'une touche (11a) d'alimentation en courant avec au moins une autre touche déterminée à l'avance du clavier, ou lorsque l'alimentation en courant est mise sous tension pour la première fois.

2. Imprimante sur bande suivant la revendication 1, dans laquelle des numéros de langage respectifs sont affectés auxdites au moins deux langues et le même numéro de message est affecté à des messages correspondants dans chaque ensemble de messages de sorte que chaque message est adressé par son numéro de message et le numéro de langue.

3. Imprimante sur bande suivant la revendication 2, dans laquelle les moyens de mémoire comportent en outre un premier tableau (62) d'adresse et une pluralité de seconds tableaux (63) d'adresse, un pour chacun des ensembles de messages, chaque entrée dans chacun des seconds tableaux d'adresse étant l'adresse d'un message, tandis que chaque entrée dans le premier tableau d'adresse étant l'adresse de démarrage d'un tableau respectif des seconds tableaux d'adresse, et dans laquelle les moyens d'extraction sont conçus pour lire à partir d'une adresse du premier tableau d'adresse correspondant au numéro de langue l'adresse de démarrage d'un second tableau d'adresse respectif pour calculer, en fonction de l'adresse de démarrage et du numéro de message une adresse du second tableau d'adresse respectif, et pour lire à partir de cette adresse ainsi calculée l'adresse d'un message à afficher.

4. Imprimante sur bande suivant l'une quelconque des revendications 1 à 3, dans laquelle les moyens de sélection de langue peuvent changer au moins l'un d'autres articles de sélection qui sont différents dans des régions et des pays dans le même processus que celui pour sélectionner une langue.
